(19) Europäisches Patentamt
European Patent Office
Office européen des brevets

(11) **EP 0 892 962 B1**

(12) **EUROPÄISCHE PATENTSCHRIFT**

(45) Veröffentlichungstag und Bekanntmachung des Hinweises auf die Patenterteilung:
**04.07.2001   Patentblatt 2001/27**

(51) Int Cl.⁷: **G06F 19/00**, G01C 23/00, G05D 1/10

(21) Anmeldenummer: **97902315.7**

(22) Anmeldetag: **04.02.1997**

(86) Internationale Anmeldenummer:
**PCT/EP97/00490**

(87) Internationale Veröffentlichungsnummer:
**WO 97/29438 (14.08.1997 Gazette 1997/35)**

(54) **VERFAHREN ZUR KORREKTUR DES FLUGABLAUFS EINES FLUGGERÄTES**

AIRCRAFT FLIGHT CORRECTION PROCESS

PROCEDE DE CORRECTION DE VOL POUR AERONEF

(84) Benannte Vertragsstaaten:
**DE ES FR GB IT NL SE**

(30) Priorität: **10.02.1996   DE 19604931**

(43) Veröffentlichungstag der Anmeldung:
**27.01.1999   Patentblatt 1999/04**

(73) Patentinhaber: **Euro Telematik GmbH
89081 Ulm (DE)**

(72) Erfinder:
• **ONKEN, Reiner
  D-85521 Ottobrunn (DE)**
• **PREVOT, Thomas
  Santa Clara, CA 95051 (US)**

(56) Entgegenhaltungen:
DE-A- 4 327 706          GB-A- 2 176 035
US-A- 4 179 693          US-A- 4 442 491

**EP 0 892 962 B1**

**Beschreibung**

Die Erfindung betrifft ein Verfahren zur Korrektur des Flugablaufs eines Fluggerätes gemäß Oberbegriff des Patentanspruchs 1. Ein solches Verfahren ist aus der GB 2 176 035 A bekannt.

Verfahren dieser Art können ganz allgemein in Flugablaufsteuerungssystemen für bemannte oder unbemannte Fluggeräte wie Flugzeuge, Helikopter, Luftschiffe, Flugkörper usw. eingesetzt werden.

Besonders eignen sie sich für den Einsatz in modernen Flugzeugen, die mit einem Flugablaufsteuerungssystem, insbesondere mit einem Flugführungs/Flugmanagementsystem (FMS) ausgerüstet sind.

Im Bereich der Luftfahrt haben die zunehmende Luftverkehrsdichte, die steigende Komplexität moderner Flugzeuge und die damit verbundene Verkomplizierung der Aufgabe von Flugzeugpiloten zu Überlegungen geführt, wie Piloten im Cockpit bei verschiedenen Tätigkeiten unterstützt werden können, um das Fliegen sicherer zu machen. Als Ergebnisse sind z. B. Navigationsmanagementsysteme oder die bereits erwähnten Flugführungs/Flugmanagementsysteme zu nennen, welche jedoch eine Reihe von manuellen Piloteneingaben erfordern, um den im allgemeinen vorgegebenen Flugablauf zwischen Start und Landung, das heißt den "Flugablaufplan" oder kurz "Flugplan", an aktuelle Flugsicherungsanweisungen und Veränderungen im eigenen Flugzeug oder der Umgebung anzupassen. Dadurch werden die Piloten häufig von anderen Aufgaben abgelenkt, was zu einer Sicherheitsgefährdung führen kann. Da durch diese Problematik häufig auf die Anpassung des Flugablaufs unter Zeitdruck verzichtet wird, können die Vorteile dieser Systeme oft nicht während des ganzen Fluges genutzt werden.

Aus der eingangs genannten GB 2 176 035 A ist ein solches Flugmanagementsystem bekannt, bei dem ein tragbarer Computer vorgesehen ist, in den der Pilot vor dem Start Daten über die gewünschte Flugroute bzw. Anfragen zum Wetter eingibt und auf einem Bildschirm zur Anzeige bringt. Anschließend wird der Computer über eine Telefonleitung mit der Computerzentrale einer Bodenstation verbunden, die anhand der eingegebenen Daten und Fragen einen optimalen Flugablaufplan ausarbeitet und die gewünschten Wetterinformationen liefert. Die angelieferten Daten zum Flugablaufplan bzw. zum Wetter werden auf einen tragbaren Datenträger (z.B. eine Floppy Disc) übertragen. Die Daten werden anschließend vom Datenträger in den Flugmanagementrechner an Bord des Flugzeugs überspielt, so daß über den bordeigenen Rechner dem Piloten der optimale Flugablaufplan und die Wetterinformationen während des Fluges zur Verfügung stehen. In einer Weiterbildung des Systems ist vorgesehen, daß per Funk die Computerzentrale der Bodenstation die Daten während des Fluges ergänzt oder korrigiert.

Aus der DE 43 27 706 A1 ist ein Flugmanagementsystem bekannt, das zusätzlich den Flugraum des Flugzeuges überwacht und mit Hilfe einer Kollisionsvermeidungseinrichtung mögliche Kollisionen des im Lufraum befindlichen Flugzeugs mit einem anderen Flugzeug, das dessen Flugroutenbereich tangiert oder durchkreuzt, erkennt und rechtzeitig alternative horizontale oder vertikale Kursabweichungen zur kurzfristigen Manövrierung des Flugzeugs ermittelt, die dem Piloten auf einem Bildschirm angezeigt werden. Der Pilot kann dann diese Kursabweichungsvorschläge aufgreifen und den momentanen Kurs des Flugzeugs entsprechend abändern.

Weitere Flugmanagementsysteme dieser Art sind aus der US 4 179 693 und der US 4 442 491 bekannt. Bei dem System der US 4 179 693 wird während des Fluges die relative Position des Flugzeugs zu den entlang der Flugroute positionierten Funkfeuer am Erdboden festgestellt (Ist-Position) und mit dem Flugablaufplan (Soll-Position) verglichen und anschließend ein Korrektursignal herausgegeben, das zur Korrektur des Flugkurses verwendet wird.

In dem System der US 4 442 491 werden ebenfalls vor dem Flug ermittelte Daten zum Flugablaufplan mit während des Fluges ermittelten Daten verglichen und daraus Korrektursignale abgeleitet.

Der Erfindung liegt daher die Aufgabe zugrunde, ein Verfahren anzugeben, mit dem der vorgesehene Flugablauf eines Fluggeräts nach einer Änderung der flugablaufsrelevanten Parameter automatisch korrigiert werden kann.

Die erfindungsgemäße Lösung der Aufgabe ist durch die Merkmale des Patentanspruchs 1 wiedergegeben; die übrigen Ansprüche enthalten vorteilhafte Aus- und Weiterbildungen der Erfindung (Ansprüche 2 bis 14) sowie eine bevorzugte Anwendung der Erfindung (Anspruch 15).

Ein wesentlicher Vorteil der Erfindung ist darin zu sehen, daß sie eine autonome wie interaktive Erstellung von Flugablaufplänen als Reaktion z.B. auf Flugsicherungsanweisungen bzw. auf lückenhafte Piloteneingaben ermöglicht. Diese geänderten Flugablaufpläne bewirken eine Änderung des Flugpfades, wenn sie z.B. über das Flugführungs/ Flugmanagementsystem und den Autopiloten auf das Fluggerät (z.B. das Flugzeug) aufgeschaltet werden oder manuell vom Piloten abgeflogen werden.

Im Gegensatz zu den Verfahren bei bislang konzipierten Pilotenunterstützungssystemen (vgl. z.B. /1/ ), kann das Verfahren nach der Erfindung ohne umfangreiche infrastrukturelle Maßnahmen z.B. in einem modernen Verkehrsflugzeug eingesetzt werden. Die gewerbliche Nutzung könnte somit sehr bald die Hauptprobleme heutiger Flugführungs/Flugmanagementsysteme (komplizierte Umprogrammierung in anstrengenden Flugphasen) beseitigen und ermöglicht somit auch eine weitgehend automatische Flugdurchführung (unter Pilotenkontrolle) von Start bis Landung auch bei außergewöhnlichen Situationen.

Im folgenden wird die Erfindung anhand der Figuren näher erläutert. Es zeigen:

FIG. 1     das Flußdiagramm einer Flugzustandsänderung, die mit Hilfe einer bevorzugten Ausführungsform des erfindungsgemäßen Verfahrens und eines Flugführungs/Flugmanagementsystems durchgeführt wird

FIG. 2     das Flußdiagramm einer Flugzustandsänderung, die mit Hilfe eines bekannten Flugführungs/Flugmanagementsystems durchgeführt wird (zum Vergleich mit FIG. 1)

FIG. 3     eine blockschaltbildähnliche funktionale Darstellung der bevorzugten Ausführungsform des erfindungsgemäßen Verfahrens gemäß FIG. 1

FIG. 4-5     eine schematische Darstellung eines Beispiels eines vorgegebenen und im Verlauf des Fluges abgeänderten Flugpfades eines Flugzeuges in der lateralen Ebene mit einer aufgetretenen Diskontinuität im Flugpfad (FIG. 4) und mit einem gemäß einer bevorzugten Ausführungsform des erfindungsgemäßen Verfahrens korrigierten Flugpfad ohne Diskontinuität (FIG. 5)

FIG. 6-10     schematische Darstellungen verschiedener Stadien des nach einer Steuerkursänderung zu korrigierenden Fiugpfades eines Flugzeugs, dessen Korrektur gemäß einer vorteilhaften Ausbildung der bevorzugten Ausführungsform des erfindungsgemäßen Verfahrens erfolgt

FIG. 11     eine schematische Darstellung eines Stadiums des nach einer Steuerkursänderung zu korrigierenden Flugpfades eines Flugzeugs, dessen Korrektur gemäß einer anderen vorteilhaften Ausbildung der bevorzugten Ausführungsform des erfindungsgemäßen Verfahrens erfolgt.

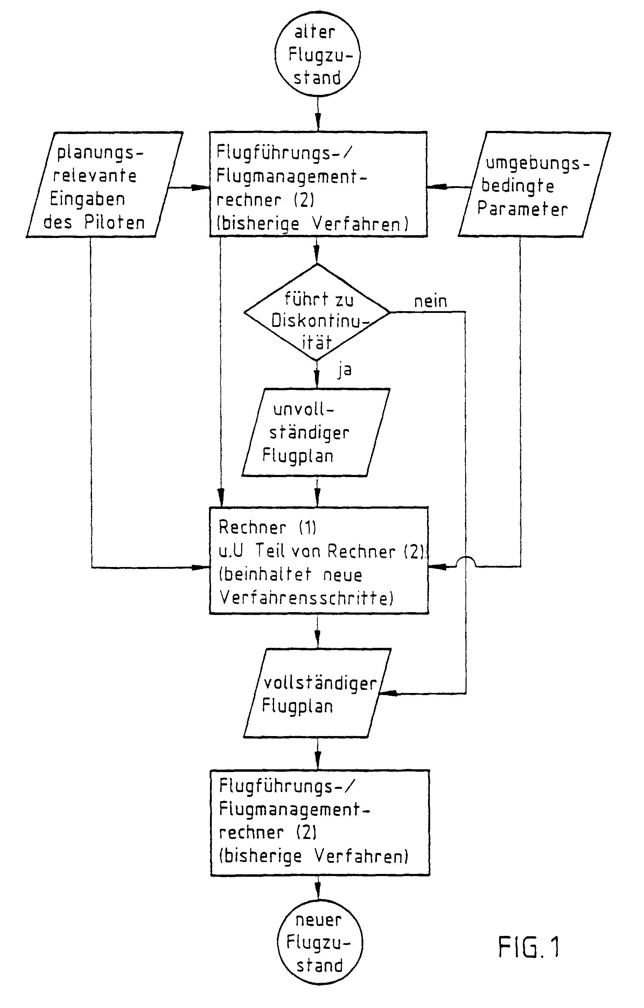

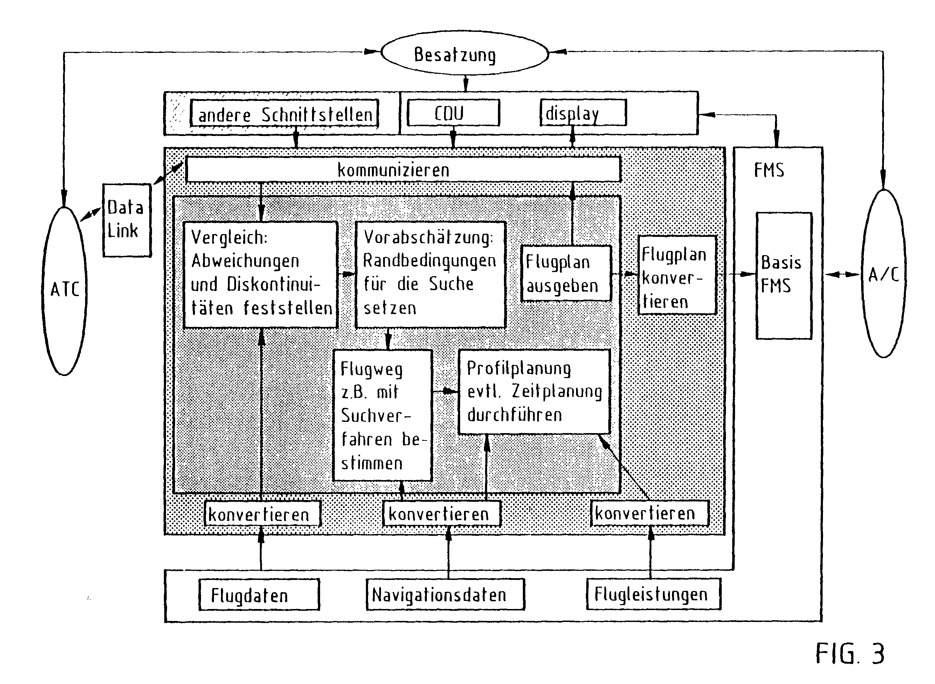

Das in FIG. 1 und FIG. 3 dargestellte Ausführungsbeispiel der Erfindung geht von einem Fluggerät (z. B. einem Flugzeug) aus, das mit einem rechnergestützten Flugführungs/Flugmanagementsystem ausgerüstet ist. Um in diesem Beispiel das Flugzeug vom alten Flugzustand z.B. nach einer Steuerkursänderung in den neuen Flugzustand zu überführen, werden folgende Verfahrensschritte durchgeführt:

- einem Rechner 1 werden der Flugablaufplan, der Flugzustand und weitere umgebungsbedingte Parameter, welche einem Flugführungs/Flugmanagement-Rechner 2 vorliegen, zugeführt und dort gespeichert,

- es werden die planungsrelevanten Änderungseingaben (z.B. des Steuerkurses) an die maschinellen Systeme des Flugzeugs Rechner 1 zugeführt und dort gespeichert,

- in Rechner 1 wird überprüft, ob diese Informationen eine Änderung des Flugablaufplans erforderlich machen bzw. ob sie eine Diskontinuitat in diesem Flugablaufplan zur Folge haben,

- Rechner 1 fordert bei Bedarf Navigationsdaten und, wenn vorhanden, Flugleistungsdaten bei den auch Rechner 2 zur Verfügung stehenden Datenbanken an,

- in Rechner 1 wird bei einer lateralen Diskontinuität oder Abweichung mit Hilfe eines geeigneten Such- und Auswahlverfahrens der Flugpfad innerhalb der Diskontinuität lateral korrigiert,

- danach oder im Falle einer rein vertikalen Diskontinuität oder Abweichung wird das Flughöhenprofil mindestens für den Bereich der Diskontinuität oder bei Bedarf für den gesamten restlichen Flugablaufplan korrigiert bzw. neu erzeugt und

- dieser korrigierte Flugablaufplan wird Rechner 2 zugeführt.

Hierbei können Rechner 1 und Rechner 2 physikalisch getrennt oder als ein Rechner ausgeführt sein. Es ist jedoch sicherzustellen, daß Rechner 1 ständig den aktuellen Flugablaufplan, die aktuellen Flugzustandsgrößen und aktuelle umgebungsbedingte Parameter, wie atmosphärische Größen, navigatorische Werte u. ä. erhält. Ferner kann Rechner 1 auf die Navigationsdatenbank und, wenn vorhanden, auf die Flugleistungsdatenbank von Rechner 2 zu jeder Zeit zugreifen.

Als planungsrelevante Änderungseingaben müssen Rechner 1 z.B. alle Anweisungen der Flugsicherung oder ersatzweise für Kurs, Höhe und Geschwindigkeit die Autopiloteneingaben des Piloten und die Eingaben des Piloten, welche er auch dem Rechner 2 zu planerischen Zwecken übermittelt, zugeführt werden. Damit wird sichergestellt, daß ein Abweichen von dem bisherigen Flugablaufplan, häufig mit der Folge einer Diskontinuität, erkannt wird.

Ein Abweichen vom vorgesehenen Flugablaufplan liegt vor, wenn z.B. eine vom Flugablaufplan abweichende Flugsicherungsanweisung in das System eingespeist wird, oder wenn z.B. der Pilot deutlich erkennbar das Flugzeug in einen vom vorgesehenen Flugablaufplan abweichenden Sollzustand einbringt oder einbringen möchte. Dies kann dadurch erkannt werden, daß stationär eine andere Flughöhe, ein anderer Kurs oder eine andere Geschwindigkeit eingenommen wird, oder daß dem Autopiloten vom Flugablaufplan abweichende Sollgrößen eingegeben werden.

Eine Diskontinuität im Flugablaufplan liegt vor, wenn ein derzeitiges Flugführungs/Flugmanagementsystem einen Hinweis auf eine Diskontinuität an den Piloten übermitteln würde. Dies bedeutet, daß der Flugablaufplan in einer solchen Situation in seiner Streckenführung (lateral) und/ oder in seiner Höhenführung (vertikal) nicht vollständig ist und somit nicht bis zu seinem Ende durchgehend abfliegbar ist.

An dieser Stelle müßte beim heutigen Stand der Technik der Pilot den Flugplan durch eigene Eingaben vervollständigen oder aber das Flugführungs/Flugmanagementsystem bei Erreichen der Diskontinuität ausschalten, um manuell die notwendigen Autopiloten- und Frequenzeinstellungen oder Steuertätigkeiten durchzuführen.

Der Einsatz des erfindungsgemäßen Verfahrens dagegen bewirkt, daß das Flugzeug auch weiterhin automatisch seine Lage im Raum gemäß den äußeren Vorgaben verändern kann, und Diskontinuitäten automatisch überbrückt werden können. Hierzu wird bei einer bevorzugten Ausführungsform des Verfahrens bei einer lateralen Diskontinuität mit Hilfe eines geeigneten Such- und Auswahlverfahrens ein geeigneter Flugpfad aus den Daten, die z.B. in einer Navigationsdatenbank gespeichert sind, ermittelt. Dieses Such- und Auswahlverfahren bestimmt den Flugpfad von einem zuvor abgeschätzten Ende des aktuellen Zustands, bzw. der aktuellen Vorgabe, bis zu einem vorgegebenen Zielpunkt, z.B. bis zum Zielflugplatz. Das Such- und Auswahlverfahren kann hier z. B. auf dem an sich bekannten A*-Algorithmus (vgl. z. B. /2/) oder einem anderen geeigneten Suchalgorithmus basieren. Ein solcher Algorithmus sucht den günstigsten Flugpfad von einem Startpunkt zu einem Zielpunkt, indem der bisherige Flugpfad um neue Pfadelemente erweitert wird. Diese Elemente werden nach bestimmten Kriterien ausgewählt. Entscheidend für die Funktionstüchtigkeit des Algorithmusses ist, daß möglichst viele der folgenden Kriterien angewendet werden:

- auch Abschnitte von Standardrouten wie z.B. Luftstraßen (nicht nur Direktverbindungen zwischen zwei Wegpunkten) dürfen zugelassen werden,

- es wird nicht direkt zur Landebahn des Zielflughafens, sondern zunächst zu einem in der Datenbank festgelegten Endanflugpunkt ("Final Approach Fix") geplant,

- es wird erst ab dem letzten sicher bekannten oder abschätzbaren Punkt im Flugpfad geplant (ist nichts bekannt, wird ab der momentanen Flugzeugposition geplant).

- folgende Kriterien fließen in die Bewertung der Pfadelemente ein:

  - Zugehörigkeit des jeweiligen Pfadelements zu Standardrouten
  - Richtung des jeweiligen Pfadelements, bezogen auf die Direktverbindung zwischen Start und Ziel
  - Länge des jeweiligen Pfadelements, bezogen auf den Zustand der bord- und bodenseitigen Navigationsanlagen
  - Lage des jeweiligen Pfadelements, bezogen auf erfaßte lokale Wetterstörungen (Gegenwind, Sturm, Gewitter, Hagel, Schnee, Nebel usw.)
  - Raumgewinn durch das jeweilige Pfadelement

- der gesamte Pfad wird zusätzlich nach folgenden Kriterien bewertet:

  - Länge des Pfades
  - voraussichtlicher Kraftstoffverbrauch
  - das Such- und Auswahlverfahren wird beendet, wenn

    - der optimale Pfad gefunden wurde oder
    - ein ausreichend guter Pfad gefunden wurde oder
    - in einer bestimmten Anzahl von Versuchen (z. B. 500) kein besserer Pfad gefunden wurde oder
    - alle möglichen Pfade getestet wurden oder
    - ein maximale Anzahl (z. B. 10000) Pfade bewertet wurden.

Mit einem Such- und Auswahlverfahren, welches diese Kriterien verwendet, wird grundsätzlich ein lateraler Flugweg gefunden. Ist der Bereich der Diskontinuität allerdings relativ klein, d.h. kleiner als z.B. 50 NM (insbesondere bei Vorgabe eines neuen Steuerkurses im Anflug), so kann anstelle eines solchen aufwendigen Such- und Auswahlverfahrens auch eine Ermittlung des Flugablaufplans über eine weniger aufwendige Prozedur erfolgen (NM = nautische

**EP 0 892 962 B1**

Meile; 1 NM = 1,8532 km). Bei letzterer Vorgehensweise wird, ausgehend vom abgeschätzten Endpunkt des Flugablaufplans vor der Diskontinuität, durch Einfügen weiterer Flugpfadelemente eine Streckenführung ermittelt, welche die Anfluggrundlinie hinreichend weit vor der eigentlichen Landeendphase in ausreichender Höhe anschneidet.

Durch Modifikation der Kriterien oder Veränderung der Wichtigkeit einzelner Kriterien untereinander lassen sich auch Prioritäten ändern, so daß ein Anpassung an unterschiedliche Erfordernisse ohne Änderung des Verfahrens möglich ist. Das heißt, daß das Verfahren sowohl für die heutige Luftverkehrsituation, in der häufig Funknavigationsverfahren angewendet werden und die Flugpfade über Luftstraßen führen, als auch für zukünftige Situationen, in denen die Navigation unabhängig von Luftstraßen und Funkfeuern z.B. unter Zuhilfenahme von Satellitennavigationsverfahren durchgeführt wird, geeignet ist.

Ist der Flugpfad lateral geschlossen, so wird automatisch eine Neufestsetzung des Flughöhenprofils durchgeführt, was nun möglich ist, da der laterale Flugpfad bekannt ist. Hierzu kann, wenn vorhanden, die Flugleistungsdatenbank des Flugführungs/Flugmanagementrechners mitbenutzt werden.

An diese Höhen-Profilplanung kann nachfolgend noch eine Zeit/Geschwindigkeitplanung angeschlossen werden, da alle notwendigen Parameter dafür dann vorliegen. Je nach Art der Diskontinuität oder Abweichung (Flugstrecke, Flughöhe, Geschwindigkeit, Zeit) können einzelne Planungsstufen auch entfallen.

Der vervollständigte, korrigierte Flugablaufplan wird Rechner 2 zugeführt, so daß sämtliche unterstützenden Funktionen, welche der Flugführungs/Flugmanagementrechner 2 bereitstellt, weiterhin verfügbar bleiben, jedoch ohne, daß der Pilct durch umfangreiche Umprogrammierungsvorgänge zusätzlich belastet wird. Bei einer direkten Aufschaltung des korrigierten Flugablaufplans auf das Flugführungs/ Flugmanagementsystem bewirkt das Verfahren eine entsprechende Änderung der Fluglage des Fluggeräts bzw. Flugzeugs im Raum.

Im folgenden sei ein allgemeines Anwendungsbeispiel beschrieben, dem folgende typische Situation aus dem täglichen Flugbetrieb zugrundeliegt:

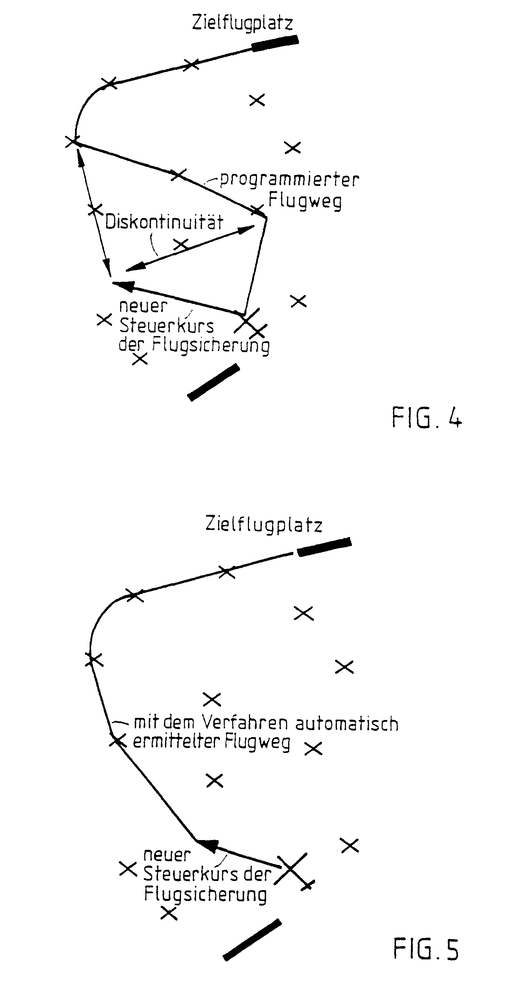

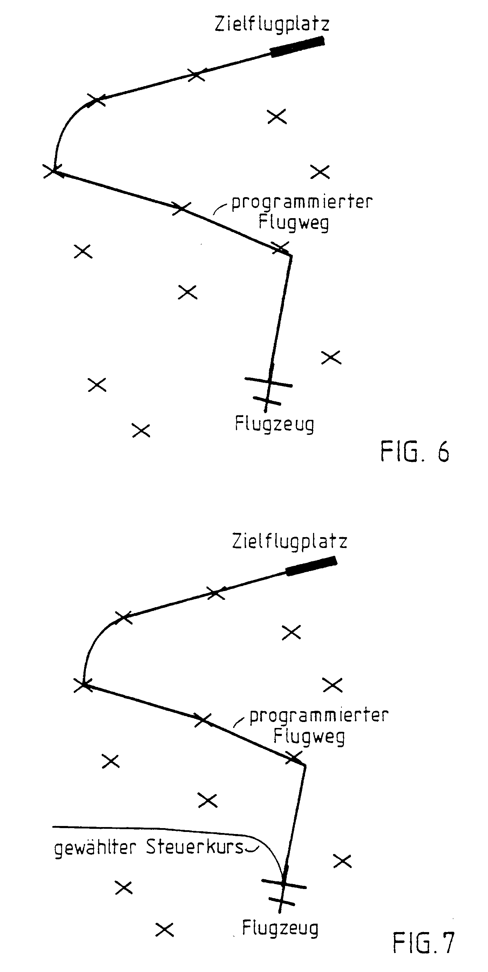

Der Pilot eines modernen Verkehrsflugzeugs bekommt beim Anflug auf einen Flugplatz die Anweisung, einen bestimmten Steuerkurs zu fliegen, welcher von den programmierten Flugpfaddaten im Flugführungs/Flugmanagementsystem ("Flight Management System" (FMS)) abweicht (vgl. auch FIG. 4; in FIG. 4 wie auch in den FIG. 5 bis 10 ist der Flugpfad in der lateralen Ebene dargestellt: Funkfeuer sind jeweils mit einem Kreuz, Start- und Zielflugplatz jeweils durch ein schmales Rechteck, die momentane Position des Flugzeugs durch ein symbolisiertes Flugzeug und dessen Flugpfad durch einen schwarzen Strich dargestellt). Er gibt diesen Steuerkurs in sein FMS ein und erhält vom FMS die Meldung "Laterale Diskontinuität" als Reaktion oder er gibt den neuen Steuerkurs direkt an der Autopilotenbedieneinheit ein. In beiden Fällen wäre eine umfangreiche Neuplanung des weiteren Anflugs für den Piloten nötig, verbunden mit einer Umprogrammierung des FMS, was häufig dazu führt, daß das FMS vom Piloten ausgeschaltet wird.

Bei dem vorgeschlagenen Verfahren nach der Erfindung wird die Abweichung oder Diskontinuität jedoch nicht nur erkannt, sondern automatisch beseitigt. Bei dem Verfahren wird zunächst der Zeitraum abgeschätzt, für den der angegebene neue (geänderte) Steuerkurs voraussichtlich gültig sein wird, z. B. 40 Sekunden. Dann wird aus der geflogenen Geschwindigkeit, der Position, dem neuen Steuerkurs, dem momentanen Steuerkurs und der Flughöhe des Flugzeugs sowie den Windverhältnissen und diesem Zeitraum die Position berechnet, an der sich das Flugzeug in z.B. 40 Sekunden voraussichtlich befinden wird. Danach werden aus der Navigationsdatenbank des Flugzeugs alle Navigationspunkte und Luftstraßen, die sich im Bereich zwischen dieser Position und dem Endanflugteil der Landebahn des Zielflugplatzes befinden, angefordert. Mit Hilfe eines Such- und Auswahlverfahrens (z. B. unter Nutzung des zuvor bereits erwähnten A$^*$-Algorithmusses) wird nun ein geeigneter Flugpfad gesucht, der die Lücke zwischen der berechneten Position und dem Endanflugsziel schließt und als wahrscheinlich optimale Streckenführung angesehen werden kann (FIG. 5). Ist der Flugpfad (in der lateralen Ebene) bekannt, so werden die Flugleistungsdaten des Flugzeugs bei der Flugleistungsdatenbank des FMS angefordert. Mit deren Hilfe wird nun auf dem ermittelten Flugpfad das Flughöhenprofil folgendermaßen geplant: Zunächst wird die Position ermittelt, an dem die zuletzt freigegebene Flughöhe erreicht wird. Dann wird die Sollhöhe am Anfangspunkt des Endanflugs den zusätzlichen Navigationsdaten des Flugablaufplans entnommen. Zwischen diesen beiden Höhen läßt sich bei bekannter Flugstrecke und bekannten Flugleistungen sehr leicht eine günstige Höhenführung ermitteln, indem z. B. ein geeignetes Optimierungsverfahren angesetzt wird. Da nun auch in Abhängigkeit der Flugabschnitte typische Geschwindigkeiten zugrunde gelegt werden können, kann auch die neue Ankunftszeit des Flugzeugs an verschiedenen Streckenpunkten sowie am Zielflugplatz recht genau ermittelt werden. Der so bearbeitete Flugablaufplan wird dem FMS des Flugzeugs also sehr schnell nach der Flugsicherungsanweisung wieder zugeführt, so daß der korrigierte Flugablaufplan auf einem Bildschirm vor dem Piloten angezeigt und diesem also die automatische Lösung verdeutlicht werden kann. Sämtliche Funktionen des an sich bekannten FMS können ohne zusätzliche Umprogrammierung weiter verwendet werden. Das Flugzeug kann automatisch oder manuell zur Landung gebracht werden.

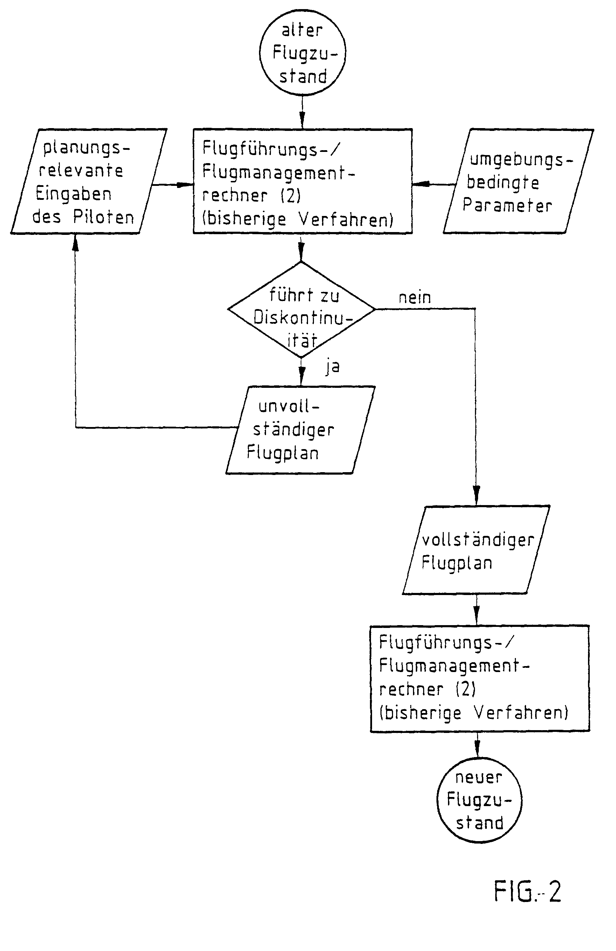

Der unterschied, der sich aus dem Einsatz des Verfahrens ergibt, ist in den Figuren 1 und 2 skizziert. Ein bestimmter Anfangsflugzustand (bezeichnet als alter Flugzustand) wird in einen Flugführungs/Flugmanagementrechner, der mit einem herkömmlichen Verfahren arbeitet, gespeist. Neue planungsrelevante Änderungseingaben z.B. des Piloten werden in das System gespeist und führen mit weiteren umgebungsbedingten Parametern zu einem neuen Flugablaufplan. Je nach Eingabe kann in diesem Flugablaufplan eine Diskontinuität enthalten sein oder nicht. Eine solche Diskontinuität liegt z.B. vor, wenn der Pilot einen Wegpunkt anwählt, welcher im bisherigen Flugablaufplan nicht enthalten war. Wird so nur ein unvollständiger Flugablaufplan produziert, so mußte bisher der Pilot eine Reihe weiterer Eingaben einspeisen, wollte er einen vollständigen Flugablaufplan erhalten, den er dann auch durch den Autopiloten über längere Zeit in einen neuen Flugzustand umsetzen lassen konnte (FIG. 2).

Dagegen wird nun nach dem Verfahren gemäß FIG. 1 der unvollständige Flugablaufplan zusammen mit den dem FMS-Rechner (2) vorliegenden Größen an einen weiteren Rechner (1) übergeben, der mit dem vorgeschlagenen Verfahren arbeitet. Dieser erzeugt nun automatisch einen vollständigen Flugablaufplan, welcher wiederum über die bereits vorhandenen Funktionen im Flugführungs/Flugmanagementrechner (2) oder manuell in einen neuen Flugzustand umgesetzt werden kann.

Ein vorteilhaftes Ausführungsbeispiel eines zukünftigen Cockpits mit einem FMS und anderen Kommunikationspartnern ist in Figur 3 vereinfacht dargestellt. In der Figur sind die Hauptkomponenten heutiger Flugführungs-/Flugmanagementrechner unter der Bezeichnung 'FMS' aufgeführt. Über das als 'Basis FMS' bezeichnete Kernsystem, welches als Oberbegriff alle zum heutigen Stand eingesetzten Funktionen beinhalten soll, werden Flugdaten, Navigationsdaten und Flugleistungen bereitgestellt. Diese Einheit ist mit dem Flugzeug und verschiedenen Schnittstellen zur Besatzung verbunden. Durch Konvertierungsverfahren können diese Daten auch den im Kern der FIG. 3 angedeuteten Verfahrensschritten bereitgestellt werden. Diese Konvertierungen sind dann erforderlich, wenn die vom FMS bereitgestellten Daten in anderen Formaten vorliegen, als sie von dem Verfahrensrechner benötigt werden. Das Gesamtsystem ist überdies über eine digitale Datenverbindung (Data Link) mit der Flugsicherung und der Fluggesellschaft des Flugzeugs verbunden. Bei Eintreffen neuer planungsrelevanter Informationen werden nun die einzelnen Verfahrenschritte abgearbeitet. Es werden Abweichungen oder Diskontinuitäten festgestellt. Bei Bedarf wird eine Vorabschätzung durchgeführt, um die Randbedingungen für die Suche zu setzen. Danach wird unter Zuhilfenahme von Navigations- und Flugleistungsdaten eine korrigierte Route ermittelt, und sowohl Flugpfad als auch Flugzeit werden neu geplant. Zum Abschluß wird der Flugablaufplan dem Basis-FMS wiederum bereitgestellt.

Die Einheit ist verbunden mit Eingabeschnittstellen für die Piloten, die eine Kontroll- und Anzeigeeinheit ("Control and Display Unit" (CDU)) und eine (nicht gezeigte) Flugkontrolleinheit ("Flight Control Unit"(FCU)) beinhalten. Weiterhin können (nicht gezeigte) graphische sowie sprachliche Eingabemedien angeschlossen sein. Die zentrale Einheit beinhaltet überdies Vorrichtungen für eine digitale Datenverbindung zur Flugsicherung und zur Zentrale der Fluggesellschaft des Flugzeugs und Schnittstellen zu weiteren Flugzeugavioniksystemen. Sie stellt somit ein hochwertiges, in das Cockpit integriertes Flugmanagementsystem dar, wie es für zukünftige Verkehrsflugzeuge vorgesehen ist und heute zum Teil bereits angewendet wird.

Anhand dieser Anordnung und des allgemeinen Anwendungsbeispiels soll das Verfahren nun detailliert durch drei spezielle Ausführungsbeispiele beschrieben werden. Dabei schließen sich diese Ausführungen nicht grundsätzlich gegenseitig aus, sondern können je nach Aufgabenstellung und Situation auch nebeneinander eingesetzt werden. So kann die in folgendem Beispiel 1 dargestellte vereinfachte Suche bevorzugt in Flugplatznähe betrieben werden. Befindet sich das Flugzeug in größerer Entfernung vom Zielflugplatz (z.B. noch am Boden des Startflugplatzes), so sollte eher ein Verfahren, wie es in den Beispielen 2 und 3 dargestellt ist, eingesetzt werden. Diese Unterscheidung und Auswahl kann als Bestandteil des Gesamtverfahrens integriert werden.

Beispiel 1:

| Ausführung: | Verfahren mit vereinfachter Suche. |
| Beispielsituation: | Pilot nimmt in Flugplatznähe neuen Steuerkurs ein. |
| Darstellung: | Figuren 6 bis 10 |

In der Ausgangssituation befindet sich das Flugzeug z.B. ca. 25 NM vom Flugplatz entfernt in einer Höhe von z.B. ca. 8000 Fuß. Der Flugabiaufplan im FMS und im Verfahrensrechner ist auf dem aktuellen Stand. Diese Ausgangssituation ist in Figur 6 dargestellt. Der Pilot stellt nun an der Autopilotenbedieneinheit einen neuen Steuerkurs ein. Bei bisherigen Systemen hätte dieses keinen Einfluß auf den vorprogrammierten Flugpfad gehabt, solange der Pilot ihn nicht explizit umprogrammiert (FIG. 7).

Der Flugzustand, der Flugablaufplan und diese planungsrelevante Änderungseingabe des Piloten muß nun dem Verfahrensrechner (Rechner 1 in FIG. 1) zugeführt werden.

Im vorgestellten Verfahren wird die Abweichung zwischen dem Soll-Steuerkurs gemäß vorgegebenem Flugablaufplan und dem vom Piloten selektierten Ist-Steuerkurs durch Vergleich der beiden Größen festgestellt. Dabei sollte eine Abweichung nur dann als solche identifiziert werden, wenn die beiden Kurse einen Mindestunterschied, 10 Grad sind ein geeignetes Maß, aufweisen, und der selektierte Steuerkurs für eine bestimmte Mindestzeit, eine Größenordnung von 3 Sekunden ist sinnvoll, konstant bleibt.

Dieser selektierte Steuerkurs wird als Vorgabe zur Korrektur des Flugpablaufplans genommen. Da sich das Flugzeug nahe am Zielflugplatz befindet, wird hier ein vereinfachtes Verfahren zur Korrektur des Flugpfades verwendet.

Bei diesem Verfahren wird davon ausgegangen, daß ein Anflug, welcher durch das Einnehmen eines bestimmten Steuerkurses eingeleitet wird, ein sog. 'vectored approach', bestimmten Gesetzmäßigkeiten genügt, so daß die Anflüge einen weitgehend vorhersagbaren Verlauf nehmen.

Zunächst werden diejenigen Teile des bisherigen Flugablaufplans aus einer temporären Flugplankopie eliminiert, welche durch die Korrektur ersetzt werden sollen. In diesem Beispiel, in dem sich das Flugzeug im Anflug auf den Ziel-Flugplatz befindet (näher als z.B. 50 NM, unterhalb z.B. 10000 Fuß), wird davon ausgegangen, daß der nächste Punkt eines Standard-Ausführungs/Flugmanagementverfahrens, (wie er in der Navigationsdatenbank gespeichert ist), auf das Flugzeug bei der Korrektur des Flugpfades zurückzuführen ist, der Anfangspunkt des Endanflugs sein wird. Damit kann der restliche Flugablaufplan als hinfällig angenommen werden. Es obliegt der Detailausführung, ob der Endanflug (inklusive Fehlanflug) aus dem alten Flugplan übernommen wird, oder ob er von der Datenbank neu angefordert wird. Für das Verfahren ist wesentlich, daß der Endanflug vertikal wie lateral bekannt ist.

Damit ist der Zielbereich festgelegt. Der nächste erforderliche Schritt ist, abzuschätzen, wo der neue Steuerkurs das Flugzeug hinführen wird.

Hier wird über trigonometrische und flugmechanische Beziehungen zunächst der Punkt berechnet, an dem das Flugzeug den neuen Steuerkurs erreicht haben wird. Dabei fließen die aktuelle Flugzeugposition, die Fluggeschwindigkeit und die Drehrate, weiche z.B. mit einer Standarddrehrate von 3 Grad pro Sekunde angenommen werden kann, sofern kein genauerer Wert vorliegt, ein.

Die Länge des Abschnitts, welcher voraussichtlich mit konstantem Steuerkurs geflogen wird, kann folgendermaßen bestimmt werden: In Abhängigkeit von der Entfernung des Flugzeugs vom Startflugplatz und vom Zielflugplatz (es wird der näher gelegene Flugplatz gewählt) wird die typische Dauer eines solchen Geradeausfluges bestimmt. Dies geschieht hier in Form von einer Tabelle, die z.B. folgende Einteilung haben kann:

0 NM ≤ Entfernung Flugzeug-Flugplatz < 15 NM:     30 s

15 NM ≤ Entfernung Flugzeug-Flugplatz < 40 NM:     60 s

40 NM ≤ Entfernung Flugzeug-Flugplatz :     120 s

Diese Tabelle kann verfeinert oder durch eine kontinuierliche Funktion ersetzt werden.

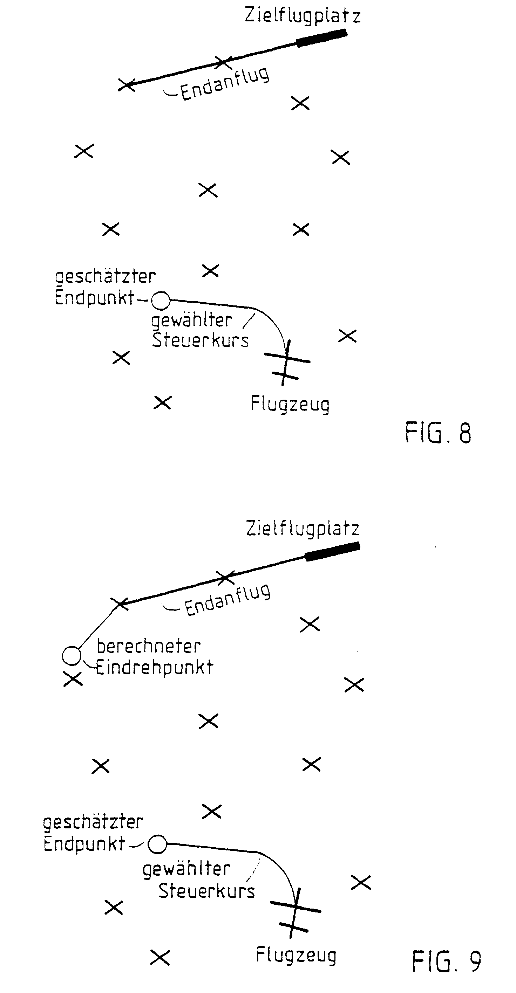

Im vorliegenden Beispiel ergibt sich also mit einer Entfernung von 25 NM eine Dauer von 60 s. Mit dieser Dauer wird unter Berücksichtigung des Windes der Punkt abgeschätzt, an dem sich das Flugzeug nach 60 Sekunden befinden wird. Damit sind die Randbedingungen für die weiteren Verfahrensschritte gesetzt (FIG. 8).

Aus diesen Festlegungen ergibt sich eine Diskontinuität im Flugplan zwischen dem geschätzten Endpunkt des Abschnitts mit konstantem Steuerkurs und dem Endanflug.

Das vereinfachte Such- und Auswahlverfahren, mit dem das Problem lokal gelöst wird, basiert auf bestimmten Regeln und ist folgendermaßen ausgeführt:

Es werden verschiedene typische radargeführte Anflugverläufe ermittelt und derjenige ausgewählt, welcher bestimmte Randbedingungen als erster erfüllt. Diese Randbedingungen sind u.a. durch die Sinkflugleistungen, die Länge des Flugweges und die erforderlichen Kursänderungen gegeben.

Als erster Flugverlauf wird untersucht, ob die geradlinige Verlängerung des Steuerkurses hinter dem geschätzten Endpunkt die Anfluggrundlinie in einer akzeptablen Entfernung zur Landebahn schneidet. Dazu wird der Schnittpunkt zwischen Landebahnverlängerung und Steuerkursgerade ermittelt. Liegt dieser Schnittpunkt weiter vom Zielflugplatz entfernt als ein Punkt, an dem das Flugzeug im Anflug spätestens die Zielkonfiguration zur Landung erreicht haben sollte (z.B. die aus der Navigationsdatenbank erhältliche äußere Einflugmarkierung oder ersatzweise ein Punkt im Anflug, an dem das Flugzeug mindestens 1000 Fuß über der Landebahnhöhe sein sollte), und ist dieser Schnittpunkt weniger als z.B. 20 NM von der Landebahn entfernt, so wird dieser Flugverlauf weiter untersucht, sonst verworfen.

In dem gewählten Beispiel der FIG. 8 wird er verworfen, da der (in FIG. 8 nicht gezeigte) Schnittpunkt (zwischen der verlängerten Endanflugsgeraden und der über den geschätzten Endpunkt hinaus verlängerten Geraden des gewählten Steuerkurses) zu weit entfernt vom Flugplatz liegt.

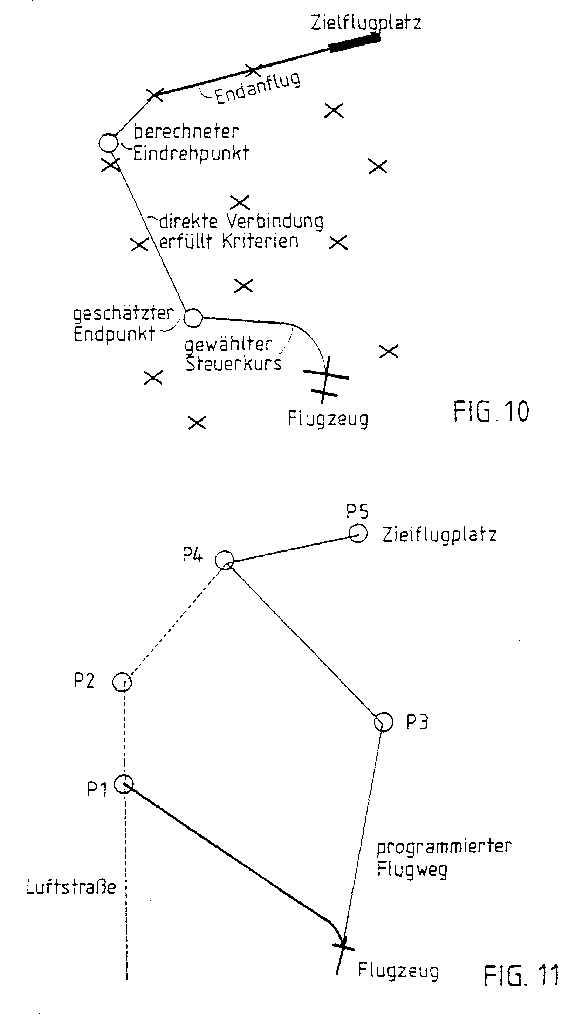

Somit wird der nächste mögliche Anflugverlauf untersucht: Da die Flugzeuge in aller Regel von der Flugsicherung unter einem Anschneidewinkel von typisch 30 Grad auf den Endanflug geführt werden, kann der Anflugabschnitt um dieses Anschneidestück ergänzt werden. Dazu wird bestimmt, von welcher Seite her (in Figur 9: von oben oder von unten) das Anschneiden erfolgen wird. Es wird angenommen, das der Endanflug in der Regel von der Seite angeschnitten wird, auf der der geschätzte Endpunkt des vorgegebenen Steuerkurses liegt. Die Anwendung eines

EP 0 892 962 B1

größeren Satzes an Regeln zur Bestimmung dieser Seite ist ebenfalls denkbar.

Die exakte Position des Eindrehpunktes wird als Schnittpunkt der mit (beispielhaft) 30 Grad an den Endanflugpunkt angetragenen Geraden und einer auf der gleichen Seite liegenden mit 5 Grad zur Endanflugrichtung an den Landebahnbezugspunkt angetragenen Geraden bestimmt. Dieses entspricht der Art, in der solche Anschneidemanöver von Piloten üblicherweise durchgeführt werden.

Um nun den Flugverlauf zu vervollständigen, werden zunächst der geschätzte Endpunkt und der berechnete Eindrehpunkt direkt miteinander verbunden.

Die Gesamtstrecke vom Flugzeug zum berechneten Eindrehpunkt läßt sich berechnen. Die Höhe des Flugzeugs ist bekannt und die Höhe, die das Flugzeug am Endanflugpunkt haben sollte, ebenso. Um festzustellen, ob die Höhendifferenz auf der Strecke über Grund abbaubar ist, werden die Sinkflugleistungen der Flugleistungsdatenbank entnommen. Stellt sich beim Vergleich zwischen der an sich erforderlichen Sinkflugstrecke und der vorhandenen Sinkflugstrecke heraus, daß die vorhandene Strecke unter Berücksichtigung der Flugleistungen und z.B. eines akzeptablen (Passagier)Komforts ausreichend ist, so ist die vereinfachte Suche beendet. Andernfalls werden Zwischenabschnitte eingefügt oder der Endanflug weiter vom Flugplatz entfernt begonnen, d. h., daß der Endanflugpunkt sukzessive (jeweils um z.B. 1 NM) weiter vom Fluplatz entfernt geplant wird, was insgesamt zu einer größeren Gesamtstrecke führt.

Ist mit dieser Vorgehensweise der laterale Flugpfad bestimmt, so kann der Höhenverlauf abgeschätzt werden. Dies kann über ein Optimierungsverfahren geschehen oder an Hand von bestimmten Regeln, welche für den Höhenverlauf anwendbar sind. In der beschriebenen Ausführung sollen (beispielhaft) Regeln nach dem folgenden Muster angewendet werden:

- Muß das Flugzeug noch auf der aktuellen Höhe verbleiben, so plane einen Horizontalflug von z.B. einer Minute Länge und beginne die weitere Sinkflugplanung an dem sich daraus ergebenden Punkt.

- Ist die Entfernung, die das Flugzeug zum Sinken auf die Höhe, in der es den vorgegebenen Gleitwinkel des Endanflugs anschneiden soll, benötigt, nicht sehr viel kleiner (hier z.B. um mindestens 3 NM) als die verfügbare Entfernung, so plane einen kontinuierlichen Sinkflug (konstanter Gleitwinkel) zum Endanflug.

- Ist die o.a. Entfernung sehr viel kleiner, so plane vor Erreichen des Endanflugs einen Abschnitt von z.B. 3 NM Länge mit konstanter Höhe ein und berechne von dort aus den günstigsten Punkt zum Beginnen des Sinkflugs, ausgehend von der Höhe, die das Flugzeug als nächste einnehmen soll (z.B. durch Vorgabe der Höhe von außen oder durch Selektion am Autopiloten).

Mit Regeln dieser Form wird nun auch eine vertikale Diskontinuität vermieden bzw. korrigiert und der Flugablaufplan in zwei Ebenen (lateral und vertikal) geschlossen. Auf dieser Basis kann man nun noch eine Zeit- oder Geschwindigkeitsplanung in den Flugablaufplan integrieren, da alle übrigen Randbedingungen bekannt sind.

Wurde nun der Flugablaufplan geschlossen, so wird er (u.U. nach vorheriger Bestätigung durch den Piloten) an den Flugmanagementrechner übergeben, der die auf dem Flugablaufplan basierenden Aktionen (Darstellung, Autopilotenansteuerung usw.) durchführen kann.

Beispiel 2:

Ausführung:            xNeues Such- und Auswahlverfahren
Beispielsituation:     Pilot gibt einen neuen Wegpunkt in das FMS, den er direkt anfliegen soll
Darstellung:           Figur 11.

In der Ausgangssituation befindet sich das Flugzeug noch weit vom Zielflugplatz entfernt. Der Flugablaufplan im FMS und im Verfahrensträger ist auf dem aktuellen Stand. Der Pilot gibt an der Eingabeheit (CDU) des Flugmanagementrechners einen Wegpunkt ein, der im bisherigen Flugablaufplan noch nicht enthalten war. Bei bisherigen Systemen hätte dieses zu einer lateralen Diskontinuität geführt (vgl. hierzu auch FIG. 4), solange der Pilot diese nicht explizit durch Umprogrammieren schließt.

Der Flugzustand, der Flugablaufplan und diese planungsrelevante Änderungseingabe muß nun dem anderen Rechner, d.h. dem Verfahrensträger zugeführt werden.

Obwohl es denkbar und teilweise sinnvoll ist, den alten Flugablaufplan nur zum Teil zu modifizieren, sollen in dieser Ausführung wie in Beispiel 1 alle Flugablaufplanabschnitte mit Ausnahme des gerade eingegebenen neuen Wegpunkts, dem Weg dorthin und des Endanflugs zuzüglich eines eventuell geplanten Fehlanflugverfahrens aus dem Flugablaufplan gelöscht werden. Es verbleibt also ein Flugablaufplan von der momentanen Position des Flugzeugs zum neu eingegebenen Wegpunkt P1 mit einer Diskontinuität bis zum Endanflug P4 (FIG. 11). Diese wird nun mit einem neuen Such- und Auswahlverfahren überbrückt.

Zunächst werden bei diesem Verfahren bei der Navigationsdatenbank folgende Daten angefordert, um den

8

Suchraum festzulegen:

- Alle Anflugrouten zu der Landebahn, die im Flugablaufplan als die zu nutzende eingetragen ist.

- Befindet sich das Flugzeug zusätzlich innerhalb eines z.B. 25-NM Radius um den Startflugplatz, zusätzlich alle Abflugrouten der angegebenen Startbahn.

- Weiterhin werden alle Luftstraßenabschnitte angefordert, die sich in einem bestimmten räumlichen Bereich um den neu eingegebenen Wegpunkt und die Landebahn befinden. Dieser Bereich kann z.B. durch eine Ellipse, ein Rechteck oder eine Raute bestimmt werden. In diesem Fall soll es sich (beispielhaft) um eine Ellipse handeln.

- Außerdem werden all diejenigen Wegpunkte innerhalb desselben Bereichs angefordert, die ein Streckenfunkfeuer repräsentieren. Die Gesamtheit der betrachteten möglichen Wegpunkte ergibt sich nun aus allen Streckenfunkfeuern und den Wegpunkten, die Bestandteil der gelieferten Anflug-/Abflugrouten und Luftstraßen sind.

Dies ist der Suchraum für die neue Streckenführung, auf den der folgende Algorithmus angesetzt wird:

1 Bestimme die Abbruchbedingungen und die Schwellwerte für die zu bewertenden Pfadelemente

2 Bewerte die direkte Verbindung vom Startknoten zum Zielknoten und schreibe sie an den Anfang von WAIT

3 Solange keine Abbruchbedingung erfüllt ist und in der Warteliste noch Pfade enthalten sind, übertrage den ersten Pfad von WAIT nach OPEN

  3a Bis das letzte Pfadelement von OPEN betrachtet wurde,

    3a 1 Überprüfe, ob die Bewertung des nächsten Pfadelements über dem Schwellwert liegt
    3a 2 Wenn die Bewertung des Pfadelements über dem Schwellwert liegt, tue nichts
    3a 3 Bis der letzte Knoten betrachtet wurde, füge den nächsten noch nicht im Pfad enthaltenen Knoten in dieses Element ein.
    3a 4 Wenn der resultierende Pfad bereits betrachtet wurde, tue nichts und fahre mit Schritt 3a3 fort
    3a 5 Wenn die resultierenden zwei neuen Pfadelemente bereits bewertet wurden, übernimm diese Bewertung
    3a 6 Sonst bewerte diese Pfadelemente und speichere die Bewertungen
    3a 7 Bewerte den gesamten Pfad mit den gespeicherten Elementbewertungen gemäß einer Gütefunktion
    3a 8 Ist die Gesamtbewertung des Pfades schlechter oder gleich der Bewertung von OPEN, sortiere den Pfad gemäß seiner Bewertung nach CLOSED
    3a 9 Sonst sortiere den Pfad nach WAIT, beachte dabei die vorgegebene Suchbreite, indem erst hinter die vorgegebene Anzahl von Pfaden mit weniger Knoten sortiert wird

  3b Sortiere OPEN nach CLOSED und fahre mit Schritt 3 fort.
4 Sortiere WAIT nach CLOSED.

Hierbei bedeutet:

WAIT:    Warteliste, in die alle Pfade in der Reihenfolge ihrer bisherigen Bewertung eingetragen werden, welche noch weiter untersucht werden sollen.

OPEN:    Der Flugpfad, der aktuell betrachtet wird.

CLOSED:  Liste, in der alle Flugpfade in der Reihenfolge ihrer Bewertung eingetragen sind, die abschließend behandelt wurden und nicht mehr verbessert werden sollen.

Das Such- und Auswahlverfahren beginnt zunächst mit der Bewertung der direkten Verbindung vom Startknoten zum Zielknoten, in diesem Beispiel also vom direkt anzufliegendem Wegpunkt zum Endanflugpunkt. Die Bewertung ist in einem nachfolgenden Abschnitt beschrieben. Ist die Güte dieser direkten Verbindung nicht ausreichend, da z.B. keine Standardroute beide miteinander verbindet und die Entfernung zu groß für einen Direktflug ist, wird folgendermaßen fortgefahren: Alle Wegpunkte im Suchraum werden nacheinander als Zwischenpunkte zwischen den Start- und Zielpunkt eingefügt und mit dem gleichen Gütefunktional bewertet. Diejenigen, die besser als der Ausgangspfad sind, werden in die Warteliste (WAIT) zu einer Weiterbetrachtung sortiert, die schlechteren in die Liste der abgeschlossenen Pfade (CLOSED) einsortiert, Alle Pfadelementbewertungen werden gespeichert, um sie weiterhin verwenden zu können. Dieses Verfahren wird solange fortgeführt, bis eines der weiter vorn genannten Kriterien erfüllt ist, nach denen das Suchverfahren beendet wird, wenn:

- der optimale Pfad gefunden wurde oder
- ein ausreichend guter Pfad gefunden wurde oder
- in einer bestimmten Anzahl von Versuchen (z. B. 500) kein besserer Pfad gefunden wurde oder
- alle möglichen Pfade getestet wurden oder
- eine maximale Anzahl (z. B. 10000) Pfade bewertet

wurden.

Der dann als bester bewertete Flug wird als Suchergebnis in den Flugablaufplan eingetragen.

Der Wert eines Pfades wird dabei folgendermaßen ermittelt: In der vorgeschlagenen Prozedur werden grundsätzlich Kostenschätzungen durchgeführt. Diese Kostenschätzungen ergeben sich aus einer Verknüpfung von Einzelkosten für die Pfadelemente, die im Pfad enthalten sind, und aus einer elementübergreifenden Pfadbewertung.

In die Bewertung fließen u.a. die zuvor genannten Kriterien ein:

a) Pfadelemente:

- Zugehörigkeit des jeweiligen Pfadelements zu Standardrouten
- Richtung des jeweiligen Pfadelements, bezogen auf die Direktverbindung zwischen Start und Ziel
- Länge des jeweiligen Pfadelements, bezogen auf den Zustand der bord- und bodenseitigen Navigationsanlagen
- Lage des jeweiligen Pfadelements, bezogen auf erfaßte lokale Wetterstörungen
- Raumgewinn durch das jeweilige Pfadeiement

b) gesamter Pfad:

- Länge des Pfades
- voraussichtlicher Kraftstoffverbrauch.

Die Wirkungsweise des Verfahrens soll an der stark vereinfachten Darstellung in Figur 11 verdeutlicht werden. Punkt P1 ist der Wegpunkt, der direkt angeflogen werden soll. Der ursprünglich vorgeschlagene Flugablaufplan beinhaltet die Wegpunkte P3, P4, P5. Der Suchraum sei durch die Wegpunkte P1, P2, P3, P4 bestimmt (dabei sei die Strecke P4, P5 des Endanflugs unverändert). Als erstes wird der Pfad P1, P4 bewertet. Dieser erhält eine hohe Pfad-Element-Bewertung bei dem Kriterium "Richtung des Pfadelementes, bezogen auf die Direktverbindung von Start und Ziel", und eine niedrige bei der Bewertung "Zugehörigkeit zu einer Standardroute". Die anderen Pfadelementkriterien seien hier der Übersichtlichkeit halber nicht weiter betrachtet. Bei den Kriterien zur Bewertung des gesamten Pfades, Länge und voraussichtlicher Kraftstoffverbrauch wiederum bekommt er eine maximale Bewertung.

Die mangelnde Zugehörigkeit zur Standardroute läßt den Pfad P1, P4 nicht ausreichend gut genug erscheinen, um die Suche abzubrechen. Darum werden nun noch die Pfade P1, P2, P4 und P1, P3, P4 bewertet, um festzustellen, ob die Bewertung sich durch das Einfügen eines weiteren Wegpunktes verbessern läßt. Tatsächlich erhält der Pfad P1, P2, P4 durch die Zugehörigkeit zur Standardroute und den minimalen Umweg, der in Kauf genommen werden muß, eine bessere Bewertung als der Ausgangspfad P1, P4. Der Pfad P1, P3, P4 schneidet dagegen in allen Punkten schlechter oder gleich dem Ausgangspfad P1, P4 ab. Somit wird der Pfad P1, P2, P4 als der bestbewertete gewählt. Heutige FMS hätten im Gegensatz dazu zum Überbrücken der entstandenen Diskontinuität den Pfad P1, P3, P4 vorgeschlagen, da diese Systeme so programmiert sind, daß immer vorgeschlagen wird, nach dem direkt anzufliegenden Wegpunkt (P1) auf den nächsten im Flugablaufplan enthaltenen Wegpunkt (hier also P3) zurückzukehren.

Nachdem auch in diesem Beispiel der Flugplan lateral geschlossen wurde, kann eine Höhenplanung angesetzt werden. Die Regeln zur Höhenplanung müssen ergänzend zu den in Beispiel 1 aufgeführten Regeln allerdings auch Steigflug und Reiseflugsegmente abdecken. Hier ist es sinnvoll, eine Verfahren zur Ermittlung der günstigsten Reiseflughöhen zu integrieren, welches diese z.B. in Abhängigkeit von Entfernung, Wind und Halbkreisflugflächen aus Flugleistungstabellen oder -kurven entnimmt. Letztendlich läßt sich durch die laterale Festlegung des Flugplans auch das vertikale Profil und der Geschwindigkeitsverlauf festlegen, so daß auch hier ein vollständiger Flugablaufplan erstellt und dem Flugführungs/Flugmanagementrechner (2) zugeführt werden kann, um ein automatisches oder manuelles Abfliegen zu gewährleisten.

Die in Beispiel 2 dargestellte Ausführung kann auch auf Beispiel 1 angewendet werden, für den Fall, daß das Flugzeug weiter vom Zielflugplatz entfernt ist. In diesem Fall übernimmt der geschätzte Endpunkt des Abschnitts mit konstantem Steuerkurs die Funktion des hier direkt eingegebenen Wegpunktes.

Beispiel 3:

Ausführung:    Such- und Auswahlverfahren auf der Basis des bekannten A*-Algorithmusses (vgl. z.B. /2/)
Situation:    wie Beispiel 2.

Zur Vereinfachung sei hier die gleiche Situation wie in Beispiel 2 vorausgesetzt. Lediglich wird hier als Such- und Auswahlverfahren der an sich bekannte A*-Algorithmus verwendet. Dieser wird nach Winston (/2/) folgendermaßen realisiert:

"Prozedur A*:

1 bilde eine Liste aus Teilwegen! Die anfängliche Liste soll die Null-Länge und einen Null-Schritt-Weg von der Wurzel bis nirgendwo haben

2 Bis die Liste leer oder das Ziel erreicht ist, bestimme, ob der erste Weg in der Liste den Zielknoten erreicht

  2a Wenn der erste Weg den Zielknoten erreicht, tue nichts mehr!
  2b Wenn der erste Weg den Zielknoten nicht erreicht,

    2b1 entferne den ersten Weg aus der Liste,
    2b2 bilde durch Erweiterung des entfernten Weges um einen Schritt neue Wege,
    2b3 füge den neuen Weg in die Liste ein,
    2b4 sortiere die Liste nach der Summe der bisher aufgelaufenen Kosten und der Schätzung einer unteren Grenze der Restkosten und setze die Wege, die die niedrigsten Kosten verursachen, an die Spitze!
    2b5 Wenn zwei oder mehrere Wege einen gemeinsamen Knoten erreichen, streiche alle diese Wege bis auf den, über den wir den gemeinsamen Knoten mit den geringsten Kosten erreichen!

3 Wenn der Zielknoten gefunden wurde, melde Erfolg, sonst Mißerfolg."

Die Heuristik bei der Suche kommt durch die Bewertungsfunktion zum Ausdruck, mit der die jeweiligen Kosten für den aktuell geöffneten Pfad in Schritt 2b4 berechnet werden. Diese Kosten werden durch eine Bewertungsfunktion $f(n)$ mit $n$ als aktuellem Knoten ausgedrückt. Diese ist definiert als:

$$f(n) = g(n) + h(n)$$

Dabei stellt der Term $g(n)$ die kumulierten Kosten des Weges zum aktuellen Knoten dar und $h(n)$ eine Abschätzung der restlichen Kosten bis zum Ziel. Der Term g(n) zur Bestimmung der kumulierten Kosten kann mit der in Beispiel 2 dargestellten Pfadbewertung ermittelt werden. Zur Bestimmung von h(n) bietet sich die verbleibende Restdistanz zum Zielpunkt an. Auch mit dieser Prozedur ist dann eine Verfahrensausführung möglich.

Abschließend bleibt festzuhalten, für welche Situationen das vorgestellte Verfahren besonders wirksam sein wird.

- Einnahme oder Vorgabe eines vom Flugablaufplan abweichenden Steuerkurses

- Anfliegen oder Vorgabe eines vom Flugablaufplan abweichenden Wegpunktes

- Wechseln der Landebahnrichtung im Flug (hier müssen die neuen Endanflugdaten zunächst aus der Navigations-Datenbank entnommen werden)

- Planung des Fluges zu einem anderen Flughafen, als dem im Flugablaufplan festgelegten Zielflugplatz

- Anforderung eines alternativen Flugplans (auch über vorgegebene Zwischenwegpunkte (das Suchverfahren arbeitet sequentiell alle Zwischenabschnitte ab, bis der Flugplan geschlossen ist).

- Generierung eines Flugablaufplans nur nach Vorgabe von Start- und Zielpunkt.

- Vorgabe einer vom Flugablaufplan abweichenden Flughöhe

Zitierte Literatur:

/1/ Onken und Prévôt: "CASSY-Cockpit Assistant System for IFR Operation", Proceedings ICAS-94.7.2, Anaheim, Kalifornien, USA, 1994

/2/ Winston: "Künstliche Intelligenz", Addison-Wesley Deutschland, Bonn, 1987.


**Patentansprüche**

1. Verfahren zur Korrektur des Flugablaufs eines Fluggeräts, bei welchem Verfahren die den vorgesehenen Flugablauf festlegenden Werte von den Flugablauf beeinflussenden Parametern einem Rechner zugeführt und dort gespeichert werden, gekennzeichnet durch folgende Merkmale:

   - bei Eintritt einer Änderung in diesen Werten werden die geänderten Werte ebenfalls dem Rechner zugeführt und dort mit den gespeicherten Werten verglichen;

   - anhand der Vergleichsergebnisse und vorgegebener Prüf- und Auswahlkriterien werden mittels des Rechners zunächst überprüft, ob aufgrund der Änderung in den Parameterwerten eine Korrektur des Flugablaufs erforderlich ist, und erforderlichenfalls anschließend neue Parameterwerte für einen korrigierten Flugablauf bestimmt und anstelle der zuvor gespeicherten Parameterwerte im Rechner gespeichert;

   - die durch die neuen Parameterwerte bedingte Korrektur des Flugablaufs wird initiiert;

   - bei jeder weiteren Änderung der Parameterwerte werden die Verfahrensschritte, soweit erforderlich, erneut durchgeführt.

2. Verfahren nach Anspruch 1, dadurch gekennzeichnet, daß in Fällen, in denen die Korrektur des Flugablaufs eine laterale und vertikale Korrektur des dem Flugablauf zugrundeliegenden Flugpfades bedingt, der zu korrigierende Flugpfad zunächst nur lateral korrigiert wird und anschliessend der lateral korrigierte Flugpfad vertikal korrigiert wird.

3. Verfahren nach einem der vorhergehenden Ansprüche, dadurch gekennzeichnet, daß die dem Rechner (1) zugeführten flugablaufsrelevanten Parameterwerte Angaben über den Flugpfad, die einzelnen Pfadelementen zugeordneten Flugzeiten und Fluggeschwindigkeiten, den Flugzustand und weitere, umgebungsbedingte Parameter enthalten.

4. Verfahren nach Anspruch 3, dadurch gekennzeichnet, daß die dem Rechner (1) zugeführten flugablaufsrelevanten Parameterwerte zusätzlich Angaben über Flugleistungsdaten des Fluggeräts und/oder Navigationsdaten enthalten.

5. Verfahren nach einem der vorhergehenden Ansprüche, dadurch gekennzeichnet, daß in Fluggeräten mit rechnergestützter Flugablaufsteuerung

   - dem Rechner (1) die dem Flugablaufsteuerungsrechner (2) vorliegenden flugablaufsrelevanten Parameterwerte sowie die flugablaufsrelevanten Änderungseingaben an die maschinellen Systeme des Fluggeräts zugeführt und dort gespeichert werden;

- für den Fall einer durch den Rechner (1) festgestellten erforderlichen Korrektur des Flugablaufs die vom Rechner (1) bestimmten neuen Parameterwerte einerseits anstelle der zuvor im Rechner (1) gespeicherten Parameterwerte gespeichert werden und andererseits dem Flugablaufsteuerungsrechner (2) zugeführt und dort gespeichert werden.

6. Verfahren nach Anspruch 5, dadurch gekennzeichnet, daß bei einer vom Rechner (1) festgestellten Diskontinuität im vorgesehenen Flugpfad die neuen Parameterwerte für einen korrigierten Flugpfad ohne Diskontinuität in der Weise bestimmt werden:

- daß bei einer rein lateralen oder rein vertikalen Diskontinuität der Flugpfad im Bereich der Diskontinuität oder im gesamten noch abzufliegenden Teil des Flugpfades korrigiert wird oder

- daß bei einer gemischt lateral-vertikalen Diskontinuität der Flugpfad im Bereich der Diskontinuität oder im gesamten noch abzufliegenden Teil des Flugpfades zunächst nur lateral korrigiert wird und anschließend der lateral korrigierte Flugpfad vertikal korrigiert wird.

7. Verfahren nach Anspruch 6, dadurch gekennzeichnet, daß der Flugpfad in Pfadelemente unterteilt ist und bei der Korrektur dieses Pfades einzelne oder alle der bisherigen Pfadelemente dieses Pfades durch neue Pfadelemente ersetzt werden.

8. Verfahren nach Anspruch 7, dadurch gekennzeichnet, daß zur Korrektur des Flugpfades Such- und Auswahlverfahren eingesetzt werden,

- die neben Direktverbindungen zwischen zwei Punkten des Pfades auch Abschnitte von vorgegebenen Standardrouten als Pfadelemente berücksichtigen und/oder

- die den Luftpfad zwischen Endanflugpunkt und Zielpunkt unverändert lassen und Korrekturen nur auf Pfadabschnitten bis maximal zum Endanflugpunkt zulassen und/oder

- die Korrekturen nur ab dem letzten sicher bekannten oder abschätzbaren Anfangspunkt des Pfades für maximal den restlichen noch abzufliegenden Luftpfad bis maximal zum Endanflugpunkt oder Zielpunkt zulassen und nur für den Fall, daß dieser Anfangspunkt nicht angebbar ist, die Korrekturen ab der momentanen Fluggerätposition zulassen.

9. Verfahren nach einem der Ansprüche 7 oder 8, dadurch gekennzeichnet, daß bei der Korrektur des Flugpfades folgende Kriterien bei der Auswahl der neuen Pfadelemente zur Anwendung kommen:

- Zugehörigkeit des jeweiligen Pfadelements zu einer vorgegebenen Standardroute und/oder

- Richtung des jeweiligen Pfadelements, bezogen auf die Direktverbindung zwischen zwei Punkten auf dem Pfad und/oder

- Länge des jeweiligen Pfadelements, bezogen auf den Zustand der bord- und/oder bodenseitigen Navigationsanlagen und/oder

- Lage des jeweiligen Pfadelements, bezogen auf erfaßte lokale Wetterstörungen und/oder

- Raumgewinn durch das jeweilige Pfadelement.

10. Verfahren nach Anspruch 9, dadurch gekennzeichnet, daß zusätzlich die Gesamtlänge des sich jeweils ergebenden korrigierten Flugpfades und/oder die zugehörige voraussichtliche Gesamtflugzeit und/oder der zugehörige voraussichtliche Kraftstoffverbrauch bei der Auswahl der Pfadelemente berücksichtigt werden.

11. Verfahren nach einem der Ansprüche 8 oder 9, dadurch gekennzeichnet, daß die Suche nach dem optimal korrigierten Flugpfad mittels des Such- und Auswahlverfahrens beendet wird, sobald

- der optimal korrigierte Flugpfad gefunden wurde oder

- ein nach vorgegebenen Abbruchkriterien ausreichend korrigierter Flugpfad gefunden wurde oder

- in einer vorgegebenen Anzahl von weiteren Versuchen kein besserer zulässiger Flugpfad gefunden wurde oder

- alle möglichen Flugpfade oder eine maximale Anzahl von möglichen Flugpfaden bewertet und der unter diesen Pfaden optimal korrigierte Flugpfad festgestellt wurden.

12. Verfahren nach einem der vorhergehenden Ansprüche in der Anwendung bei Luftfahrzeugen mit einem Flugführungs/Flugmanagementsystem, dadurch gekennzeichnet, daß bei einer Steuerkursänderung des Luftfahrzeuges

a) zunächst der Zeitraum abgeschätzt wird, für den der neue Steuerkurs voraussichtlich gültig sein wird,

b) anschließend aus der Geschwindigkeit, der momentanen Position, dem neuen Steuerkurs, dem momemtanen Steuerkurs und der Flughöhe des Luftfahrzeugs sowie der Windverhältnisse und diesem Zeitraum die neue Position des Luftfahrzeugs berechnet wird, die das Luftfahrzeug mit dem neuen Steuerkurs nach dem Zeitraum voraussichtlich einnehmen wird,

c) aus einer Navigationsdatenbank alle Navigationspunkte und Luftstraßen im Bereich zwischen der neuen Position des Luftfahrzeugs und dem vorgegebenen Endanflugpunkt angefordert werden und mit Hilfe des vorgegebenen Such- und Auswahlverfahrens ein lateral korrigierter Flugpfad festgelegt wird, und

d) anschließend für diesen lateral korrigierten Flugpfad ein Flughöhenprofil erstellt wird, indem zunächst die Position ermittelt wird, an dem die zuletzt freigegebene Flughöhe erreicht wird, und anschließend zwischen dieser Position und der vorgegebenen Sollhöhe an den Endanflugpunkt nach vorgegebenen Such- und Auswahlkriterien ein günstiges Flughöhenprofil entlang des lateral korrigierten Flugpfades erstellt wird.

13. Verfahren nach Anspruch 12, dadurch gekennzeichnet, daß für die einzelnen Pfadelemente Geschwindigkeitswerte für das Luftfahrzeug vorgegeben werden und aus der Strekken- und Höhenführung entlang des korrigierten Flugpfades und den vorgegebenen Geschwindigkeitswerten für die einzelnen Pfadelemente die voraussichtliche Gesamtflugzeit und/oder die voraussichtliche Ankunftszeit und/oder der voraussichtliche Kraftstoffverbrauch des Luftfahrzeugs bestimmt wird (werden).

14. Verfahren nach einem der Ansprüche 12 oder 13, dadurch gekennzeichnet, daß in der Nähe des Zielpunktes Steuerkursänderungen dann nicht berücksichtigt werden und keine ensprechende Korrektur des verbleibenden Flugablaufs nach sich ziehen, wenn sie innerhalb eines vorgegebenen Raumwinkels, vorzugweise innerhalb eines Raumwinkels von bis zu 5° bis 15° um den jeweiligen momentanen Steuerkurs herum liegen oder der geänderte Steuerkurs nur für eine vorgegebene Höchstzeit, vorzugsweise 2 bis 5 Sekunden, eingehalten wird.

15. Flugablaufsteuerung für einen Flugkörper, insbesondere Flugführungs/Flugmanagementsystem für ein Flugzeug, gekennzeichnet durch die Verwendung des Verfahrens nach einem der vorhergehenden Ansprüche insbesondere zur Beseitigung von Diskontinuitäten im Flugpfad nach Änderungen des vorgegebenen Flugablaufs.


**Claims**

1. A method of correcting the flight of an aircraft, in which method the values of flight-influencing parameters that determine the predetermined flight are supplied to a computer and stored there, <u>characterized by the following features</u>:

- if a change in these values occurs, the changed values are likewise supplied to the computer and compared there to the stored values;
- using the comparison results and predetermined checking and selection criteria, the computer first checks whether a flight correction is necessary due to the change in the parameter values, and, if need be, the computer subsequently determines new parameter values for a corrected flight and stores them in the computer instead of the previously-stored parameter values;

- the flight correction stipulated by the new parameter values is initiated;
- with each further change in the parameter values, the method steps are performed again as needed.

2. The method according to claim 1, characterized in that, in cases in which the flight correction stipulates a lateral and a vertical correction of the flight path underlying the flight, the flight path to be corrected is first corrected only laterally and, subsequently, the laterally-corrected flight path is corrected vertically.

3. The method according to one of the foregoing claims, characterized in that the flight-relevant parameter values supplied to the computer (1) contain information about the flight path, flight times associated with the individual path elements, and flight velocities, the flight status, and further, environment-stipulated parameters.

4. The method according to claim 3, characterized in that the flight-relevant parameter values supplied to the computer (1) additionally contain information about flying-performance data for the aircraft, and/or navigation data.

5. The method according to one of the foregoing claims, characterized in that, in aircraft equipped with computer-aided flight control,

- the flight-relevant parameter values present at the flight-control computer (2) are supplied to the computer(1), and the flight-relevant change inputs are supplied to the aircraft's mechanical systems and stored there;
- in the event that the computer (1) determines that a flight correction is necessary, the new parameter values determined by the computer (1) are stored in the computer (1) instead of the parameter values previously stored there, on the one hand, and, on the other hand, they are supplied to the flight-control computer (2) and stored there.

6. The method according to claim 5, characterized in that, with a discontinuity in the provided flight path, as determined by the computer (1), the new parameter values for a corrected flight path without discontinuity are determined as follows:

- with a purely lateral or purely vertical discontinuity, the flight path is corrected in the region of the discontinuity, or in the entire portion of the flight path that is still to be traversed, or
- with a mixed lateral-vertical discontinuity, the flight path is first corrected only laterally in the region of the discontinuity, or in the entire portion of the flight path that is still to be traversed, and the laterally corrected flight path is subsequently corrected vertically.

7. The method according to claim 6, characterized in that the flight path is subdivided into path elements, and, in the correction of this path, individual path elements or all of the previous path elements of this path are replaced by new path elements.

8. The method according to claim 7, characterized in that, for correcting the flight path, search-and-selection procedures are used which

- also take into consideration segments of predetermined standard routes as path elements, in addition to direct connections between two points of the path, and/or
- leave the air path between the final-approach fix and the destination point unchanged, and permit corrections only to path segments at the most up to the final-approach fix, and/or
- only permit the corrections as of the last reliably-known or estimatable initial point of the path at the most up to the final-approach fix or destination point, and only for the case that this initial point cannot be given, allow the corrections as of the instantaneous aircraft position.

9. The method according to claim 7 or 8, characterized in that the following criteria are used in the selection of the new path elements in the flight-path correction:

- the association of the respective path element with a predetermined standard route, and/or
- the direction of the respective path element, in relation to the direct connection between two points on the path, and/or
- the length of the respective path element, in relation to the status of the on-board and/or ground navigation facilities, and/or
- the position of the respective path element, in relation to detected local weather disturbances, and/or

- the gain in space due to the respective path element.

10. The method according to claim 9, characterized in that, additionally, the entire length of the respective corrected flight path and/or the associated, foreseeable total flight time and/or the associated, foreseeable fuel consumption is or are considered in the selection of the path elements.

11. The method according to claim 8 or 9, characterized in that the search for the optimally-corrected flight path by means of the search-and-selection procedure is ended as soon as

- the optimally-corrected flight path has been found, or
- a flight path that is sufficiently corrected in accordance with predetermined break-off criteria has been found, or
- no better, allowable flight path has been found in a predetermined number of further attempts, or
- all possible flight paths or a maximum number of possible flight paths are evaluated, and the optimally corrected flight path among them is determined.

12. The method according to one of the foregoing claims as used in aircraft equipped with a flight-guidance/flight-management system, characterized in that, in a change in aircraft heading,

a) first the time frame for which the new heading is anticipated to be valid is estimated;
b) subsequently, the position the aircraft is anticipated to assume with the new heading after this time frame is calculated from the speed, the instantaneous position, the new heading, the instantaneous heading and the flight altitude of the aircraft, as well as the wind conditions and the estimated time frame;
c) all navigation points and airways located in the region between the new position and the predetermined final-approach fix of the runway of the destination airport are requested from the navigation database of the aircraft, and, with the aid of the predetermined search-and-selection procedure, a laterally-corrected flight path is determined;
d) and subsequently, a flight-altitude profile is created for this laterally-corrected flight path in that, first, the position is determined at which the last-provided flight altitude is attained, and then a favourable flight-altitude profile along the laterally-corrected flight path is created between this position and the predetermined nominal altitude at the final-approach fix.

13. The method according to claim 12, characterized in that speed values for the aircraft are predetermined for the individual path elements, and the foreseeable total flight time and/or the foreseeable arrival time and/or the foreseeable fuel consumption of the aircraft is or are determined from the path and altitude guidance along the corrected flight path and the predetermined speed values for the individual path elements.

14. The method according to claim 12 or 13, characterized in that changes in heading in the vicinity of the destination point are not taken into consideration, and no corresponding correction of the remaining flight is effected, if the changes are within a predetermined solid angle, preferably within a solid angle of up to 5° to 15° around the respective instantaneous heading, or if the changed heading is maintained for only a predetermined maximum time, preferably 2 to 5 seconds.

15. A flight control for an aircraft, particularly a flight-guidance/flight-management system for an airplane, characterized by the use of the method according to one of the foregoing claims, particularly for eliminating discontinuities in the flight path following changes in the predetermined flight.

**Revendications**

1. Une méthode de correction du vol d'un aéronef, par laquelle les valeurs de paramètres qui influencent le vol et déterminent le vol prédéterminé sont fournies à un calculateur et y sont enregistrées, et caractérisée par les particularités suivantes :

- si un changement de ces valeurs se produit, les valeurs modifiées sont de même fournies au calculateur et y sont comparées aux valeurs qui y étaient enregistrées;
- en utilisant les résultats de la comparaison et des critères de vérification et de sélection prédéterminés, le calculateur vérifie d'abord si une correction du vol est nécessaire de par le fait du changement des valeurs des paramètres, et, si nécessaire le calculateur détermine ensuite de nouvelles valeurs de paramètres pour un vol corrigé et les enregistre dans le calculateur à la place des valeurs de paramètres qui y étaient précédemment enregistrées;

- la correction de trajectoire stipulée par les nouvelles valeurs de paramètres est amorcée;
- à chaque changement ultérieur de valeurs de paramètres, les étapes de la méthode sont effectuées à nouveau selon les besoins.

2. Méthode suivant la revendication 1, caractérisée par le fait que dans les cas où la correction du vol stipule une correction latérale et verticale de la trajectoire soutenant le vol, la trajectoire à corriger est d'abord corrigée exclusivement latéralement et que la trajectoire corrigée latéralement est ensuite corrigée verticalement.

3. Méthode suivant les revendication précédentes, caractérisée par le fait que les valeurs pertinentes pour le vol fournies au calculateur (1) contiennent des informations sur la trajectoire de vol, les durées de vol associées aux segments individuels de la trajectoire, et les vitesses de vol, le statut du vol, et de plus des paramètres relevant de l'environnement.

4. Méthode suivant la revendication 3, caractérisée par le fait que les valeurs de paramètres relatives au vol fournies au calculateur (1) contiennent en outre des informations sur les données de performance de vol pour l'aéronef, et/ou des données de navigation.

5. Méthode suivant les revendication précédentes, caractérisée par le fait que sur les aéronefs équipés d'un système de contrôle du vol assisté par ordinateur,

- les valeurs de paramètres pertinentes pour le vol présentes dans le calculateur de contrôle du vol (2) sont fournies au calculateur (1), et les changements de valeurs d'entrées pertinents par rapport au vol sont fournis aux systèmes mécaniques de l'aéronef et y sont enregistrés;
- au cas où le calculateur (1) détermine qu'une correction du vol est nécessaire, les nouvelles valeurs de paramètres déterminées par le calculateur (1) sont d'une part enregistrées dans le calculateur (1) à la place des valeurs de paramètres qui y étaient précédemment enregistrées, et d'autre part, elles sont fournies au calculateur de contrôle du vol (2) et y sont enregistrées.

6. Méthode suivant la revendication 5, caractérisée par le fait que en cas de discontinuité dans la trajectoire de vol fournie, telle que déterminée par le calculateur (1), les nouvelles valeurs de paramètres pour une trajectoire de vol corrigée sans discontinuité sont déterminées comme suit :

- en cas de discontinuité purement latérale ou purement verticale, la trajectoire de vol est corrigée dans la région de la discontinuité, ou dans la portion complète de la trajectoire de vol qui doit encore être achevée, ou
- en cas de discontinuité mixte concernant en même temps les plans latéraux et verticaux, la trajectoire de vol est d'abord corrigée exclusivement latéralement dans la région de la discontinuité ou dans la portion complète de la trajectoire de vol qui doit encore être achevée, et la trajectoire de vol corrigée latéralement est ensuite corrigée verticalement.

7. Méthode suivant la revendication 6, caractérisée par le fait que la trajectoire de vol est subdivisée en segments de trajectoire, et que pour la correction de cette trajectoire, des segments de trajectoire particuliers ou tous les segments de trajectoire précédents de cette trajectoire sont remplacés par de nouveaux segments de trajectoire.

8. Méthode suivant la revendication 7, caractérisée par le fait que pour la correction de la trajectoire de vol, des procédures de recherche et sélection sont utilisées. Ces procédures

- prennent aussi en considération des segments de routes standards prédéterminées comme éléments de trajectoire, en supplément de connexions directes entre deux points de la trajectoire, et/ou
- laissent la trajectoire aérienne entre le point d'approche finale (final-approach fix) et le point de destination inchangée, et ne permettent des corrections qu'aux segments de trajectoires qui ne vont pas au-delà du point d'approche finale, et/ou
- ne permettent les corrections qu'à partir du dernier point initial de la trajectoire estimable ou connu de façon fiable et au plus jusqu'au point d'approche final ou au point de destination, et seulement dans le cas où ce point initial ne peut être donné permettent les corrections à partir de la position instantanée de l'aéronef.

9. Méthode suivant la revendication 7 ou 8, caractérisée par le fait que les critères suivants sont utilisés pour la sélection des nouveaux éléments de trajectoire dans la correction de la trajectoire de vol :

- l'association de l'élément de trajectoire respectif avec une route standard prédéterminée, et/ou
- la direction de l'élément de trajectoire respectif, en relation avec la connexion directe entre deux points de la trajectoire, et/ou
- la longueur de l'élément de trajectoire respectif, en relation avec le statut des équipements de navigation à bord et/ou au sol, et/ou
- la position de l'élément de trajectoire respectif, en relation avec les perturbations météorologiques locales détectées, et/ou
- le gain d'espace dû à l'élément de trajectoire respectif.

10. Méthode suivant la revendication 9, caractérisée par le fait que, de plus, la longueur complète de la trajectoire de vol respective corrigée et/ou la durée de vol totale prévisible associée et/ou la consommation de carburant associée prévisible est ou sont considérés dans la sélection des éléments de trajectoire.

11. Méthode suivant la revendication 8 ou 9, caractérisée par le fait que la recherche de la trajectoire de vol corrigée de façon optimale à l'aide de la procédure de recherche et sélection est terminée dès que

- la trajectoire de vol corrigée de façon optimale a été trouvée, ou
- une trajectoire de vol suffisamment corrigée par rapport à un critère d'arrêt prédéterminé a été trouvée, ou
- aucune meilleure trajectoire de vol acceptable n'a été trouvée parmi un nombre prédéterminé d'essais ultérieurs, ou
- toutes les trajectoires de vol possibles ou un nombre maximal de trajectoires de vol possibles ont été examinées et la trajectoire de vol corrigée de façon optimale a été déterminée parmi ces deux catégories.

12. Méthode suivant les revendication précédentes telle qu'utilisée dans les aéronefs équipés d'un système de guidage de vol/gestion de vol, et caractérisée par le fait que en cas de changement de cap de l'aéronef,

a) premièrement la fenêtre temporelle durant laquelle le nouveau cap est escompté comme valide est estimée ;
b) par la suite, la position que l'aéronef est supposé occuper à la fin de la fenêtre temporelle suite à ce nouveau cap est calculée à partir de la vitesse, la position instantanée, le nouveau cap, le cap instantané et l'altitude de vol de l'aéronef, ainsi que les conditions de vent et la fenêtre temporelle estimée ;
c) tous les points de navigation et routes aériennes situés dans la région entre la nouvelle position et le point d'approche finale (final-approach fix) prédéterminé de la piste de l'aéroport de destination sont demandés à la base de données de navigation de l'aéronef, et, avec l'aide de la procédure de recherche et sélection prédéterminée, un plan de vol corrigé latéralement est déterminé.
d) et par la suite, un profil d'altitudes de vol est créé pour cette trajectoire corrigée latéralement en déterminant premièrement la position à laquelle la dernière altitude de vol fournie sera atteinte, et ensuite en créant un profil d'altitudes de vol avantageux le long du profil latéral corrigé, entre cette position et l'altitude nominale prédéterminée au point d'approche finale.

13. Méthode suivant la revendication 12, caractérisée par le fait que les valeurs de vitesse pour l'aéronef sont prédéterminées pour les segments de trajectoire individuels, et que la durée totale de vol prévisible et/ou le temps d'arrivée prévisible et/ou la consommation prévisible de carburant par l'aéronef est ou sont déterminés à partir de la trajectoire et du guidage d'altitude le long de la trajectoire de vol corrigée et à partir des valeurs de vitesse prédéterminées pour les segments de trajectoire individuels.

14. Méthode suivant la revendication 12 ou 13, caractérisée par le fait que les changements de cap à proximité du point de destination ne sont pas pris en considération, et qu'aucune correction correspondante n'est apportée au reste du vol si ces changements se font à l'intérieur d'un angle solide prédéterminé, de préférence à l'intérieur d'un angle solide de 5° à 15° autour du cap instantané respectif, ou si le cap modifié n'est maintenu que pendant un temps maximum prédéterminé, de préférence de 2 et 5 secondes.

15. Un système de contrôle de vol pour un aéronef, particulièrement un système de guidage de vol/gestion de vol pour un avion, caractérisé par l'utilisation de la méthode d'après une des revendications précédentes, particulièrement dédié à l'élimination des discontinuités dans la trajectoire de vol induites par des changements dans le vol prédéterminé.

FIG.1

FIG.-2

FIG. 3

FIG. 4

FIG. 5

Zielflugplatz

programmierter
Flugweg

Flugzeug

FIG. 6

Zielflugplatz

programmierter
Flugweg

gewählter Steuerkurs

Flugzeug

FIG.7

Zielflugplatz

Endanflug

geschätzter
Endpunkt

gewählter
Steuerkurs

Flugzeug

FIG. 8

Zielflugplatz

Endanflug

berechneter
Eindrehpunkt

geschätzter
Endpunkt

gewählter
Steuerkurs

Flugzeug

FIG. 9

Zielflugplatz

Endanflug

×

berechneter
Eindrehpunkt

×

×

×

×direkte Verbindung
×\erfüllt Kriterien  ×

×

geschätzter
Endpunkt

gewählter
Steuerkurs

×

×

Flugzeug

×

FIG. 10

P5

P4  Zielflugplatz

P2

P3

P1

programmierter
Flugweg

Luftstraße

Flugzeug  FIG. 11